# EUROPÄISCHE PATENTSCHRIFT

(11) **EP 0 901 895 B1**
(45) Veröffentlichungstag und Bekanntmachung des Hinweises auf die Patenterteilung: **12.11.2003**
(21) Anmeldenummer: 98810874.2
(22) Anmeldetag: 02.09.1998
(51) Int. Cl.: B28D 1/14, B23B 41/00

(54) **Bohrgerät**
Drilling device
Machine de forage

(30) Priorität: 15.09.1997 DE 19740462
(43) Veröffentlichungstag der Anmeldung: 17.03.1999
(73) Patentinhaber: HILTI Aktiengesellschaft, 9494 Schaan (LI)
(72) Erfinder: Ostermeier, Peter, 86911 Diessen (DE); Golubovic, Goran, 80469 München (DE); Büchel, Benno, 9491 Ruggell (FI); Fritz, Mark, 6841 Mäder (AT)
(74) Vertreter: Wildi, Roland

(56) Entgegenhaltungen:
- US-A- 4 487 275
- US-A- 5 316 419

## Beschreibung

Die Erfindung betrifft ein Bohrgerät gemäss dem Oberbegriff des Patentanspruchs 1.

Bei der Herstellung von Bohrlöchern für Dübelbefestigungen oder Rohrdurchführungen in harten Untergründen werden oft Bohrgeräte mit Bohrwerkzeugen mit einem diamantbestückten Schneidenbereich verwendet. Ein derartiges Bohrgerät ist beispielsweise aus der DE-PS 34 34 261 bekannt und weist neben einer elektrischen Antriebseinheit ein Getriebe sowie eine Aufnahme für das Bohrwerkzeug auf. Die Aufnahme besitzt einen zentralen Aufnahmebereich für das Einsteckende des Bohrwerkzeugs und ist in einem Gehäuseteil über zwei im Abstand voneinander beabstandeten Lagerstellen drehbar gelagert. Dieses bekannte Gerät zeichnet sich dadurch aus, dass die Längsachse der Aufnahme und die Längsachse des Bohrwerkzeuges gegenüber einer Längsachse eines Gehäuseteiles des Bohrgerätes koaxial zueinander ausgerichtet und drehbar gelagert sind. Vor allem bei handgeführten Bohrgeräten ist das Bohren wegen der hohen erforderlichen Anpresskraft und den relativ langen Bohrzeiten anstrengend. Die Anpresskraft wird auf die gesamte Stirnfläche des bohrrichtungsseitigen Schneidenbereiches des Bohrwerkzeuges verteilt, so dass sich nur eine geringe Flächenpressung ergibt und die vorstehenden Diamanten nur wenig in den Untergrund eindringen und diesen abbauen können. Durch das geringe Eintauchen in den Untergrund neigen die Diamantspitzen zum Verrunden und der gesamte Bohrprozess entwickelt sich zunehmend schlechter. Die Bohrgeschwindigkeit ist gering.

Der Erfindung liegt die Aufgabe zugrunde, ein Bohrgerät zu schaffen, mit dem sich mit geringer Anpresskraft eine grosse Bohrgeschwindigkeit erzielen lässt.

Die Lösung dieser Aufgabe erfolgt durch ein Bohrgerät, welches die im kennzeichnenden Abschnitt des Patentanspruchs 1 angeführten Merkmale aufweist. Mit dieser erfindungsgemässen Lösung wird dem sich drehenden Bohrwerkzeug eine kippende bzw. taumelnde Bewegung mit Drehpunkt am bohrrichtungsseitigen freien Endbereich des Bohrwerkzeuges überlagert. Die Längsachse des Bohrwerkzeuges wird dadurch periodisch zur Längsachse des Gehäuseteiles geneigt. Durch die Neigung wird jeweils ein Teil der bohrrichtungsseitigen Stirnfläche des Bohrwerkzeuges vom Untergrundes abgehoben, so dass jeweils nur immer ein Teil des Schneidenbereiches den Untergrund bearbeitet. Die Anpresskraft wirkt daher nur auf eine kleine Schneidfläche so dass sich eine sehr hohe Flächenpressung ergibt. Dies führt zu einem effizienten Abbauen des Untergrundes, zu einer hohen Bohrgeschwindigkeit, zu einer Verkürzung der Bohrzeiten und zu einer Verlängerung der Standzeit des Bohrwerkzeugs. Das jeweils einseitige Abheben des Schneidbereiches vom Untergrund trägt zur Verbesserung einer Kühlmittelspülung und zu einem verbesserten Abtransport des zerspanten Untergrundmaterials.

Die Aufnahme kann beispielsweise hülsenförmig ausgebildet sein, wobei das Bohrwerkzeug in einem inneren Aufnahmebereich der Aufnahme mittels eines Einsteckendes axial festlegbar ist. Das Einsteckende ist beispielsweise von wenigstens einem Lagerelement umgeben, über das sich das Einsteckende seitlich an dem Aufnahmebereich abstützt. Um eine Neigung der Längsachse des Bohrwerkzeuges gegenüber der Längsachse des Gehäuseteiles erzielen zu können, ist vorzugsweise wenigstens ein Lagerelement gegenüber der Längsachse des Gehäuseteiles geneigt anordbar. Das Lagerelement kann zu diesem Zweck beispielsweise eine Aufnahmeöffnung für das Einsteckende des Bohrwerkzeuges aufweisen, dessen Längsachse geneigt zur Längsachse des Gehäuseteiles verläuft.

Erfolgt eine seitliche Abstützung des Einsteckendes über zwei axial hintereinander angeordnete Lagerstellen, so sind beispielsweise die Aufnahmeöffnungen beider Lagerstellen zueinander koaxial ausgerichtet, aber gegenüber der Längsachse des Gehäuseteiles geneigt angeordnet Die seitliche Abstützung des Einsteckendes kann aber auch beispielsweise mittels wenigstens eines elastisch ausgebildeten Lagerelementes erfolgen, wobei Belastungen, die bei der Bearbeitung eines Untergrundes auf das Bohrwerkzeug wirken, zu einer Verformung des elastischen Lagerelementes und somit zu einer Neigung der Längsachse des Bohrwerkzeuges gegenüber der Längsachse des Gehäuseteiles führen. Durch die Neigung wird eine freie Kipp- bzw. Taumelbewegung des Bohrwerkzeuges angeregt, bei der jeweils ein Teil des in Bohrrichtung weisenden stimseitigen Schneidenbereiches des Bohrwerkzeuges von der Bearbeitungsstelle am Untergrund abhebt. Bei der Bearbeitung eines Untergrundes kippt bzw. taumelt das Bohrwerkzeug beispielsweise ständig oder ist ist während der Bearbeitung wahlweise zu- oder abschaltbar. Die Stärke der Kipp- bzw. Taumelbewegung hängt neben der auf das Bohrwerkzeug wirkenden Belastung beispielsweise auch ab von der Anpresskraft sowie von der Leistung einer Antriebseinheit des Bohrgerätes.

Eine kippende bzw. taumelnde Bewegung des Bohrwerkzeuges kann beispielsweise erreicht werden, indem zweckmässigerweise die Längsachse des Bohrwerkzeuges samt der Längsachse des Aufnahmebereiches gegenüber der Längsachse des Gehäuseteiles geneigt anordbar ist. Das Einsteckende des Bohrwerkzeuges ist drehfest in dem Aufnahmebereich der Aufnahme angeordnet und die Längsachse des Bohrwerkzeuges verläuft koaxial zur Längsachse des Aufnahmebereiches.

Vorzugsweise ist die Längsachse des Aufnahmebereiches mittels wenigstens einer im wesentlichen senkrecht zur Längsachse des Gehäuseteiles versetzbaren Lagerstelle geneigt anordbar. Wenn beispielsweise eine erste Lagerstelle auf der Längsachse des Gehäuseteiles angeordnet und eine zweite bohrrichtungsseitige Lagerstelle im wesentlichen senkrecht zur Längsachse des Gehäuseteiles versetzt ist, dann ist die kippende bzw. taumelartige Bewegung am bohrrichtungsseitigen freien Ende des Bohrwerkzeuges am grössten. Wenn beispielsweise die zweite bohrrichtungsseitige Lagerstelle auf der Längsachse des Gehäuseteiles angeordnet und die erste Lagerstelle im wesentlichen senkrecht zur Längsachse des Gehäuseteiles versetzt ist, dann bildet die bohrrichtungsseitige zweite Lagerstelle einen Drehpunkt, um den das Bohrwerkzeug eine kippende bzw. eine taumelnde Bewegung durchführt. Wenn beispielsweise beide Lagerstellen im wesentlichen senkrecht zur Längsachse des Gehäuseteiles versetzbar sind, wobei die erste Lagerstelle eine grössere Versetzung erfährt als die bohrrichtungsseitige zweite Lagerstelle, dann ist eine kippende bzw. eine taumelnde Bewegung des Bohrwerkzeuges um einen gedachten Drehpunkt möglich, der vom bohrrichtungsseitigen freien Ende des Bohrwerkzeuges gebildet wird. Das bedeutet, dass das Bohrwerkzeug am bohrrichtungsseitigen freien Ende keine und am gegenüberliegenden freien Ende die grösste seitliche bzw. taumelnde Bewegung ausführt.

Damit sich eine kippende bzw. taumelnde Bewegung in Abhängigkeit der an dem Bohrwerkzeug auftretenden Belastungen frei anregen kann, erfolgt vorteilhafterweise die Versetzung mittels wenigstens einem Zwischenelement, das mit wenigstens einer Lagerstelle zusammenwirkt. Das elastische Zwischenelement ist beispielsweise zwischen einer der Lagerstellen und der Aufnahme bzw. zwischen einer der Lagerstellen und dem Gehäuseteil angeordnet. Damit die Längsachse der Aufnahme gegenüber der Längsachse des Gehäuseteiles im wesentlichen senkrecht zur Längsachse des Gehäuseteiles geneigt angeordnet werden kann, steht beispielsweise die bohrrichtungsseitige zweite Lagerstelle mit dem Zwischenelement und die erste Lagerstelle mit einem Schwenklager in Verbindung. Dieses Schwenklager ist beispielsweise aus zwei ineinandergreifenden, gegenseitig schwenkbaren Ringen gebildet. Es ist natürlich auch möglich, das Schwenklager mit der ersten Lagerstelle und die bohrrichtungsseitige zweite Lagerstelle mit dem Zwischenelement in Verbindung zu bringen.

Um eine vorgegebene taumelnde Bewegung des Bohrwerkzeuges erreichen zu können, ist zur Versetzung der Lagerstelle vorzugsweise wenigstens ein Achsversatzelement vorgesehen, das zwischen wenigstens einer Lagerstelle und dem Gehäuseteil angeordnet ist. Dieses Achsversatzelement setzt sich beispielsweise aus zwei ineinandergreifenden, exzentrischen Ringen zusammen, die bei gegenseitigem Verdrehen eine seitliche Versetzung jener Lagerstelle bewirken, mit der sie in Verbindung stehen.

Das Achsversatzelement ist beispielsweise zwischen einer der Lagerstellen und der Aufnahme bzw. zwischen einer der Lagerstellen und dem Gehäuseteil angeordnet. Damit eine Neigung der Längsachse der Aufnahme gegenüber der Längsachse des Gehäuseteiles im wesentlichen senkrecht zur Längsachse des Gehäuseteiles erreicht werden kann, steht beispielsweise die bohrrichtungsseitige zweite Lagerstelle mit dem Achsversatzelement und die erste Lagerstelle mit einem Schwenklager in Verbindung. Dieses Schwenklager ist beispielsweise aus zwei ineinandergreifenden, gegenseitig schwenkbaren Ringen gebildet. Es ist natürlich auch möglich, das Schwenklager mit der ersten Lagerstelle und die bohrrichtungsseitige zweite Lagerstelle mit dem Zwischenelement in Verbindung zu bringen. Die Anordnung eines Achsversatzelementes ist beispielsweise auch bei beiden Lagerstellen möglich.

Um eine Steigerung der Bohrgeschwindigkeit erreichen und eine Berührung des Bohrwerkzeuges mit einer Bohrlochwand verhindern zu können, ist zweckmässigerweise die Längsachse des Bohrwerkzeuges gegenüber der Längsachse des Gehäuseteiles unter einem Winkel von 0,10° bis 5° neigbar.

Um eine Taumeldrehzahl erreichen zu können, die sich beispielsweise von der Drehzahl der Drehbewegung der Aufnahme bzw. des Bohrwerkzeuges unterscheidet, ist zweckmässigerweise zwischen den Lagerstellen und dem Gehäuseteil eine Zwischenhülse drehbar angeordnet, die zur Übertragung einer Drehbewegung Drehangriffsmittel aufweist. Die Zwischenhülse stützt sich dabei über zwei axial voneinander beabstandete Lager von dem Gehäuseteil ab. Aufgrund dieser erfindungsgemässen Ausgestaltung der Lagerung der Aufnahme ist es beispielsweise auch möglich, die Taumelbewegung gegenläufig zur Drehbewegung des Bohrwerkzeuges auszuführen. Die an der Zwischenhülse angeordneten Drehangriffsmittel sind beispielsweise ein Zahnrad, das von einer Antriebseinheit des Bohrgerätes in Drehbewegung versetzt wird.

Aus bearbeitungstechnischen Gründen sind vorzugsweise die Drehzahl der Zwischenhülse und die Drehzahl der Aufnahme nicht synchron. Die Zwischenhülse kann sich beispielsweise langsamer drehen als die Aufnahme.

Die Übertragung einer Drehbewegung von der Aufnahme auf das Bohrwerkzeug erfolgt vorteilhafterweise mittels eines in die Aufnahme einsetzbaren Aufnahmeteiles, das mit einem dem Schneidenbereich abgewandten Ende des Trägerkörpers verbunden ist und den Trägerkörper radial überragt. Wenn beispielsweise die Längsachse des Aufnahmebereiches gegenüber der Längsachse des Gehäuseteiles koaxial angeordnet ist und eine freie, selbständige kippende bzw. taumelnde Bewegung des Bohrwerkzeuges angeregt werden soll, so kann das Aufnahmeteil beispielsweise aus einem elastischen Material sein. Das elastische Material kann Gummi sein, der auf der Aussenseite des dem Schneidenbereich abgewandten Endes des Trägerkörpers aufvulkanisiert ist. Wird die seitliche bzw. taumelnde Bewegung des Bohrwerkzeuges mittels einer geneigten Anordnung des Aufnahmebereiches gegenüber dem Gehäuseteil erreicht, so ist das Aufnahmeteil beispielsweise aus einem nicht elastischen Material gebildet, mit dem das dem Schneidenbereich abgewandte Ende des Bohrwerkzeuges umspritzt wird. Das elastische Material kann Kunststoff oder Magnesium sein.

Weist das Bohrwerkzeug beispielsweise einen rohrförmigen Trägerkörper auf, so ist eine zusätzliche, formschlüssige Verbindung des elastischen bzw. des nicht elastischen Materiales mit dem rohrförmigen Trägerkörper möglich. Der Trägerkörper ist zu diesem Zweck auf der Aussenseite im Bereich des Einsteckendes mit Vertiefungen oder Durchgangsöffnungen versehen, in die Material des Aufnahmeteiles eindringen kann, wenn dieses Material auf das Einsteckende durch aufvulkanisieren oder aufspritzen aufgebracht wird. Die Erfindung schliesst andere elastische bzw. nicht elastische Materialien und andere Verbindungstechniken mit denen das Aufnahmeteil mit dem Einsteckende verbunden werden kann nicht aus.

Bei dem erfindungsgemässen Bohrgerät kann es sich sowohl um ein hand- wie ständergeführtes Bohrgerät handeln. Die Bearbeitung eines Untergrundes mit dem erfindungsgemässen Bohrgerät kann sowohl nass oder trocken durchgeführt werden. Zu einem verbesserten Bohrergebnis können neben der bereits genannten Bohrkrone auch diamantbesetzte Hartmetall- oder Stahlwerkzeuge, wie beispielsweise HSS-Bohrer führen. Die der Drehbewegung des Bohrwerkzeuges überlagerte kippende- bzw. taumelnde Bewegung wirkt sich auch vorteilhaft auf die schneidende Bearbeitung des Untergrundes mittels Trennwerkzeugen oder Wandsägen als auch auf die Oberflächenbearbeitung eines Untergrundes mittels beispielsweise einer axial taumelnden Topfscheibe aus.

Die Erfindung wird anhand von Zeichnungen, die ein Ausführungsbeispiel wiedergeben, näher erläutert. Es zeigen:
- Fig.1: ein erfindungsgemässes Bohrgerät mit eingesetztem Bohrwerkzeug, schematisch dargestellt;
- Fig. 2: den bohrrichtungsseitigen Bereich des Bohrgerätes gemäss Fig. 1 in vergrösserter und geschnittener Darstellung; die Neigung des Bohrwerkzeuges gegenüber einer Aufnahme wird mittels zweier elastischer Lagerelemente erreicht, die zwischen dem Bohrwerkzeug und der Aufnahme angeordnet sind;
- Fig. 3: den bohrrichtungsseitigen Bereich eines weiteren erfindungsgemässen Bohrgerätes, in vergrösserter und geschnittener Darstellung; die Neigung einer Aufnahme gegenüber einem Gehäuseteil wird mittels eines elastischen Zwischenelementes erreicht, das im Bereich einer Lagerstelle angeordnet ist;
- Fig. 4: den bohrrichtungsseitigen Bereich eines weiteren erfindungsgemässen Bohrgerätes, in vergrösserter und geschnittener Darstellung; die Neigung einer Aufnahme gegenüber einem Gehäuseteil wird mittels eines Achsversatzelementes erreicht, das im Bereich einer Lagerstelle angeordnet ist.

Aus Gründen der Vereinfachung wurden bei allen Ausführungsbeispielen für gleiche Teile die gleichen Bezugszeichen verwendet.

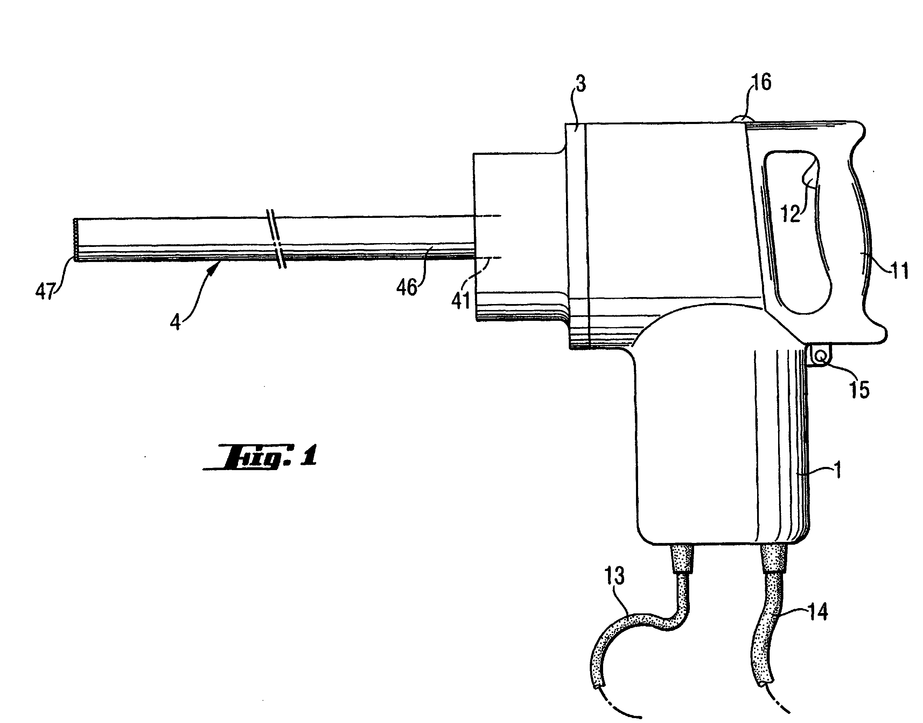

In der Fig. 1 ist ein erfindungsgemässes Bohrgerät dargestellt, das ein Gerätegehäuse 1, eine nicht dargestellte Antriebseinheit in dem Gerätegehäuse 1, einen Handgriff 11, einen im Handgriff 11 integrierten Betätigungsschalter 12, eine Kühlmittelleitung 14, eine elektrische Verbindungsleitung 13, ein Gehäuseteil 3 und ein aus dem Gehäuseteil 3 herausragendes Bohrwerkzeug 4 aufweist. Das Bohrwerkzeug 4 weist an einem ersten freien Endbereich eines rohrförmigen Trägerkörpers 46 ein Einsteckende 41 und an einem zweiten freien Endbereich einen ringförmigen Schneidenkörper 47 auf. Der Handgriff 11 ist im wesentlichen direkt über dem Bohrwerkzeug 4 an dem Gerätegehäuse 1 angeordnet. Der Befestigung des Handgriffes 11 an dem Gerätegehäuse 1 dient ein Scharnier 15 und ein dem Scharnier 15 im wesentlichen diametral gegenüberliegend angeordneter Verschluss 16. Über das Scharnier 15 ist der Handgriff 11 zumindest aus der axialen Projektionsfläche des Bohrwerkzeuges 4 verschwenkbar.

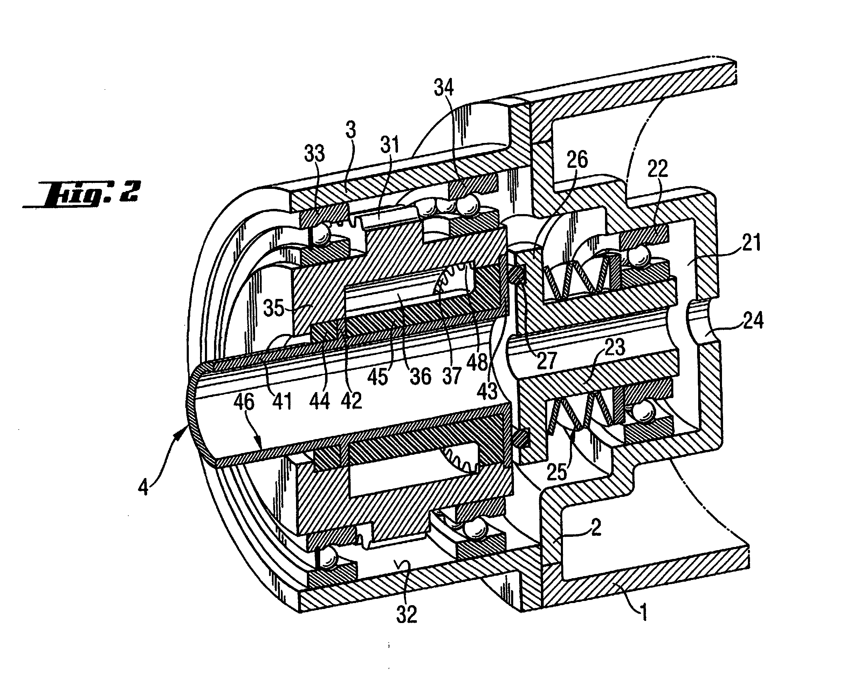

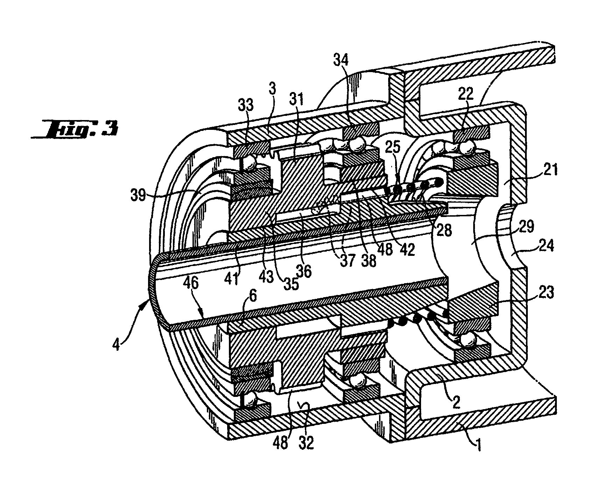

Die Fig. 2 und 3 offenbaren ein Gehäuseteil 3, das an einem freien Ende eine flanschartige Erweiterung aufweist, die mittels nicht dargestellter Verbindungselemente mit dem Gerätegehäuse 1 verbunden ist. Das Gehäuseteil 3 ist im wesentlichen rohrförmig ausgebildet und weist eine Innenwandung 32 auf, an der sich zwei voneinander beabstandete Lagerstellen 33, 34 in Form von zwei Kugellagern abstützen. Die Innenringe dieser Kugellager stehen mit einer im wesentlichen hülsenförmig ausgebildeten Aufnahme 35 in Verbindung. Ein zentraler Aufnahmebereich 36 ist gestuft ausgebildet und verjüngt sich in Bohrrichtung. An einem entgegen der Bohrrichtung weisenden Endbereich weist der Aufnahmebereich eine umlaufend ausgebildete Innenprofilierung 37 in Form einer Innenverzahnung auf.

Zwischen den beiden Lagerstellen 33, 34 befindet sich ein Drehangriffselement 31 in Form eines Zahnrades, das drehfest mit der Aufnahme 35 in Verbindung steht. Das Drehangriffselement 31 steht mit seiner Aussenprofilierung in einer nicht dargestellten wirkschlüssigen Verbindung mit der ebenfalls in Fig. 1 nicht dargestellten Antriebseinheit und dient der Übertragung einer von der Antriebseinheit ausgehenden Drehbewegung auf die Aufnahme 35 bzw. auf das in der Aufnahme 35 eingesetzte Bohrwerkzeug 4.

Der Aufnahmebereich 36 der Aufnahme 35 dient der Aufnahme des Einsteckendes 41. Der Aussendurchmesser des rohrförmigen Trägerkörpers ist kleiner als der kleinste Durchmesser des Aufnahmebereiches 36 der Aufnahme 35.

Ein Deckel 2, der sich entgegen der Bohrrichtung an das Gehäuseteil 3 anschliesst, weist einen inneren Aufnahmebereich 21 auf, der sich in Bohrrichtung stufenförmig erweitert. Der von der Bohrrichtung abgewandte Endbereich des Deckels weist eine zentrale Durchtrittsöffnung 24 auf, die der Zuführung von Kühlmittel dient und mit der in Fig. 1 dargestellten Kühlmittelleitung 14 in Verbindung steht. Die Verbindung der Durchtrittsöffnung 24 mit der Kühlmittelleitung 14 ist nicht dargestellt.

Die axiale Abstützung entgegen der Bohrrichtung erfährt der Deckel 2 beispielsweise von dem Handgriff 11, der in einer geschlossenen Stellung gegen wenigstens eine der entgegen der Bohrrichtung weisenden Flächen des Deckels 2 drückt. Das Zusammenwirken des Handgriffes 11 gemäss Fig. 1 mit dem Deckel 2 ist nicht dargestellt. Der Deckel 2 kann beispielsweise ein Teil des Handgriffes 11 sein, so dass der Deckel 2 von dem Gehäuseteil 3 abhebbar ist, wenn der Handgriff 11 in eine geöffnete Stellung verschwenkt wird und dabei eine axiale Projektionsfläche des Bohrwerkzeuges 4 freigibt, so dass beispielsweise die Entfernung eines Bohrkernes aus dem Bohrwerkzeug 4 oder eine Entnahme des Bohrwerkzeuges 4 aus der Aufnahme 35 entgegen der Bohrrichtung erfolgen kann.

Wie aus der Fig. 2 ersichtlich ist, weist die Aufnahme 35 zwischen der Innenprofilierung 37 und dem von der Bohrrichtung abgewandten freien Ende einen ersten zylindrischen Abschnitt auf. Ein weiterer, zweiter zylindrischer Abschnitt wird von einem Teil des Aufnahmebereiches gebildet, der einen kleineren Innendurchmesser aufweist, als jener Abschnitt in dem sich der erste, zylindrische Abschnitt befindet.

Im Abstand der beiden zylindrischen Abschnitte des Aufnahmebereiches 36 voneinander sind an der Aussenseite des rohrförmigen Trägerkörpers 46 scheibenförmige Führungselemente 42, 43 angeordnet. Ein erstes Führungselement 43 weist einen Aussendurchmesser auf, der im wesentlichen dem Innendurchmesser des ersten zylindrischen Abschnittes entspricht. Das zweite Führungselement 42 weist einen Aussendurchmesser auf, der im wesentlichen dem Innendurchmesser des zweiten zylindrischen Abschnittes entspricht.

Zwischen den beiden scheibenförmigen Führungselementen 42, 43 ist der rohrförmige Trägerkörper 46 von einem elastischen Lagerelement 45 umgeben. Ein Teil dieses Lagerelementes 45 weist eine auf die Innenprofilierung 37 des Aufnahmebereiches 35 abgestimmte Aussenprofilierung 48 auf. In Bohrrichtung schliesst sich unmittelbar an das zweite scheibenförmige Führungselement 42 ein weiteres elastisches Lagerelement 44 an. Der Aussendurchmesser dieses weiteren Lagerelementes 44 entspricht im wesentlichen dem Aussendurchmesser des Führungselementes 42.

Im inneren Aufnahmebereich 21 des Deckels 2 ist ein Lager 22 in Form eines Kugellagers angeordnet, das der drehbaren Lagerung und der axialen Führung eines Stützelementes 23 dient. Das Stützelement 23 durchsetzt mit einem Schaftbereich einen Innenring des Lagers 22. Der bohrrichtungsseitige Endbereich des Stützelementes 23 weist eine flanschartige Erweiterung 26 auf. Zwischen dieser flanschartigen Erweiterung 26 und dem Lager 22 befindet sich ein Federelement 25, das sich aus mehreren Tellerfedem zusammensetzt. Das gesamte Stützelement 23 weist eine zentrale Durchgangsbohrung auf, durch die Kühlmittel zum Bohrwerkzeug gelangen kann. Auf der entgegen der Bohrrichtung liegenden Seite des Lagers 22 kann ein nicht dargestelltes Dichtungselement angeordnet sein, damit Kühlmittel, welches durch die Durchtrittsöffnung 24 in den inneren Aufnahmebereich 21 dringt, nicht zum Lager 22 gelangen kann. An der bohrrichtungsseitigen Stirnseite der flanschartigen Erweiterung 26 befindet sich eine umlaufend ausgebildete Vertiefung, in die ein Dichtungselement 27 in Form eines O-Ringes teilweise ragt. Mit Hilfe dieses Dichtungselementes wird verhindert, dass Kühlmittel, welches durch die zentrale Durchgangsbohrung des Stützelementes 23 zum Bohrwerkzeug gelangt, bis zur Lagerstelle 34 dringen kann.

### Funktionsbeschreibung

Wird beispielsweise bei einem Anbohrvorgang wenig Anpresskraft auf das Bohrgerät ausgeübt, dann zentrieren die beiden an dem rohrförmigen Trägerkörper 46 angeordneten scheibenförmigen Führungselemente 42, 43 das Bohrwerkzeug 4 gegenüber der Aufnahme 35. Das bedeutet, dass das Bohrwerkzeug 4 keine taumelnde Bewegung durchführt. Nach dem Anbohrvorgang kann die Anpresskraft erhöht werden. Dies führt zu einer axialen Verschiebung des Bohrwerkzeuges 4 gegenüber der Aufnahme 35 um mindestens den Betrag der axialen Erstreckung eines der beiden scheibenförmigen Führungselemente 42, 43, so dass diese aus den zylindrischen Abschnitten des Aufnahmebereiches 36 ausrücken und sich seitlich nicht mehr abstützen können. Aufgrund der Belastung, die von dem Bohrwerkzeug 4 auf die elastischen Lagerelemente 44, 45 übertragen werden, verformen sich diese, so dass sich eine Neigung des Bohrwerkzeuges 4 gegenüber der Aufnahme 35 ergibt. Die Abstimmung der elastischen Lagerelemente 44, 45 ist derart, dass das Bohrwerkzeug 4 gegenüber der Aufnahme 35 unter einem Winkel von 0,10° bis 0,8° neigbar ist.

Wie aus der Fig. 3 ersichtlich ist, weist die Aufnahme 35 drei hintereinander angeordnete Bereiche auf, deren Durchmesser sich entgegen der Bohrrichtung stufenförmig erweitern. Zwei der Bereiche sind zylindrisch ausgebildet. Jener Bereich mit dem grössten Durchmesser befindet sich an einem der Bohrrichtung abgewandten Endbereich der Aufnahme 35 und ist mit einer zahnförmigen Innenprofilierung 37 versehen.

Das Einsteckende 41 des Bohrwerkzeuges 4 ist von einem Aufnahmeteil 6 umgeben, das drei Abschnitte aufweist. Ein erster bohrrichtungsseitiger Abschnitt ist zylindrisch ausgebildet. Der Aussendurchmesser dieses ersten Abschnittes entspricht im wesentlichen dem Innendurchmesser des kleinsten Bereiches der Aufnahme 35. Ein zweiter Abschnitt, der dem ersten Abschnitt gegenüberliegt, ist als exzentrischer Aussenkonus 28 ausgebildet, der sich entgegen der Bohrrichtung verjüngt. Ein dritter Abschnitt, der sich zwischen dem ersten und dem zweiten Abschnitt befindet, erstreckt sich radial über die beiden anderen Abschnitte und ist mit einer zahnförmigen Aussenprofilierung 48 versehen, die formschlüssig mit der Innenprofilierung 37 der Aufnahme 35 zusammenwirkt.

Im inneren Aufnahmebereich 21 des Deckels 2 ist ein Lager 22 in Form eines Kugellagers angeordnet, das der Aufnahme und der drehbaren Lagerung eines Stützelementes 23 dient. Das Stützelement 23 weist eine Durchgangsbohrung und einen exzentrischen Innenkonus 29 auf, der sich in Bohrrichtung erweitert. Der Übergangsbereich am Einsteckende vom dritten zum zweiten Abschnitt ist stufenförmig ausgebildet. Die Stufe bildet eine entgegen der Bohrrichtung weisende ringförmige Anschlagfläche, an der sich ein Federelement 25 in Form einer Druckfeder abstützt und gegen eine in Bohrrichtung weisende Stirnfläche des Stützelementes 23 drückt.

Durch die zentrale Durchtrittsöffnung 24 des Deckels 2 und die Durchgangsbohrung des Stützelementes 23 gelangt Kühlmittel zum Bohrwerkzeug 4. Auf der entgegen der Bohrrichtung liegenden Seite des Lagers 22 kann ein nicht dargestelltes Dichtungselement angeordnet sein, damit Kühlmittel, welches durch die Durchtrittsöffnung 24 in den inneren Aufnahmebereich 21 dringt, nicht zum Lager 22 gelangen kann.

Zwischen dem die Lagerstelle 33 bildenden Kugellager und der Aufnahme 35 ist ein zweiteiliges Schwenklager 39 angeordnet, das übermässige Belastungen des Kugellagers verhindert, wenn sich die Aufnahme 35 gegenüber dem Gehäuseteil 3 neigt. Zwischen dem die Lagerstelle 34 bildenden Kugellager und der Aufnahme 35 ist ein ringförmiges, elastisches Zwischenelement 38 angeordnet, das sich beim Auftreten grosser radialer Kräfte derart verformt, dass sich die Aufnahme 35 und das in der Aufnahme 35 eingesetzte Bohrwerkzeug 4 gegenüber dem Gehäuseteil 3 neigt. Das Bohrwerkzeug 4 ist gegenüber der Aufnahme 35 unter einem Winkel von 0,10° bis 0,8° neigbar. Ein zwischen der Aufnahme 35 und dem Stützelement 23 angeordnetes, nicht dargestelltes Dichtungselement kann verhindern, dass Kühlmittel zu der Lagerstelle 34 gelangen kann.

### Funktionsbeschreibung

Wird beispielsweise bei einem Anbohrvorgang wenig Anpresskraft auf das Bohrgerät ausgeübt, dann verbleibt die Aufnahme 35 gegenüber dem Gehäuseteil 3 in der darge-stellten axialen Position. Das elastische Zwischenelement 38 ist nicht verformt und die Aufnahme 35 bzw. das Bohrwerkzeug 4 verlaufen koaxial zur Längsachse des Gehäuseteiles 3.

Nach dem Anbohrvorgang kann die Anpresskraft erhöht werden. Dies führt zu einer axialen Verschiebung des Bohrwerkzeuges 4 gegenüber der Aufnahme 35 entgegen der Bohrrichtung. Dabei wird das Federelement 25 zusammengedrückt und der exzentrische Aussenkonus 28 des das Einsteckende 41 umgebenden Aufnahmeteil 6 gelangt mit dem exzentrischen Innenkonus 29 des Stützelementes 23 in Wirkverbindung. Aufgrund der exzentrischen Ausgestaltung der beiden Konen ergibt sich eine radiale Kraft, die zu einer Verformung des elastischen Zwischenelementes 38 und zu einer Neigung der Aufnahme 35 bzw. des Bohrwerkzeuges 4 gegenüber dem Gehäuseteil 3 führt. Die Höhe der Verformung des elastischen Zwischenelementes 38 und die daraus resultierende Neigung der Aufnahme 35 ist von der Anpresskraft abhängig. Je grösser die Anpresskraft ist desto grösser ist die Neigung des Bohrwerkzeuges 4 gegenüber dem Gehäuseteil 3.

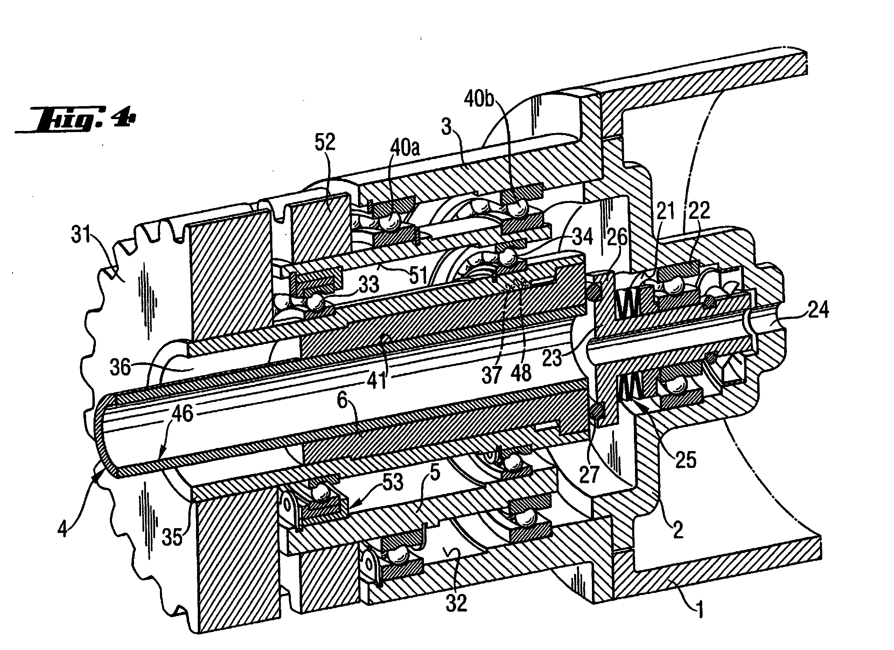

In der Fig. 4 ist ein Gehäuseteil 3 dargestellt, das an einem freien Ende eine flanschartige Erweiterung aufweist, die mittels nicht dargestellter Verbindungselemente mit dem Gerätegehäuse 1 verbunden ist. Das Gehäuseteil 3 ist im wesentlichen rohrförmig ausgebildet und weist eine Innenwandung 32 auf, an der sich zwei voneinander beabstandete Lager 40a, 40b in Form von zwei Kugellagern abstützen. Die Innenringe dieser Lager 40a, 40b stehen mit einer Zwischenhülse 5 in Verbindung, deren innere Wandung 51 zur äusseren Wandung exzentrisch verläuft. An der inneren Wandung 51 stützen sich zwei voneinander beabstandete Lagerstellen 33, 34 in Form von zwei Kugellagern ab. Die Innenringe dieser Kugellager stehen mit einer im wesentlichen hülsenförmig ausgebildeten Aufnahme 35 in Verbindung. Zwischen dem Aussenring der bohrrichtungsseitigen Lagerstelle 33 und der inneren Wandung 51 der Zwischenhülse 5 befindet sich ein Achsversatzelement 53, das sich aus zwei exzentrisch geformten Ringen zusammensetzt. Durch gegenseitiges Verdrehen dieser Ringe wird die Neigung der Aufnahme 35 gegenüber der Längsachse der Zwischenhülse 5 bzw. gegenüber der Längsachse des Gehäuseteil 3 beinflusst. Die Neigung kann 0,10° bis 0,8° betragen.

Wie aus der Fig. 4 ersichtlich ist, weist die Aufnahme 35 einen zylindrischen Aufnahmebereich 36 auf, der sich an einem entgegen der Bohrrichtung liegenden Endbereich stufenförmig erweitert. Der Übergangsbereich dieser Erweiterung ist mit einer zahnförmigen Innenprofilierung 37 versehen.

Das Einsteckende 41 des Bohrwerkzeuges 4 ist von einem Aufnahmeteil 6 umgeben, das drei Abschnitte aufweist. Ein erster bohrrichtungsseitiger Abschnitt ist zylindrisch ausgebildet. Der Aussendurchmesser dieses ersten Abschnittes entspricht im wesentlichen dem Innendurchmesser des zylindrischen Aufnahmebereiches. Ein zweiter Abschnitt, der dem ersten Abschnitt gegenüberliegt, ist flanschartig erweitert und weist eine in Bohrrichtung weisende ringförmige Anschlagfläche auf. Zwischen dem ersten und dem zweiten Abschnitt befindet sich der dritte Abschnitt, der eine formschlüssig mit *der* Innenprofilierung 37 der Aufnahme 35 zusammenwirkende, zahnförmige Aussenprofilierung 48 aufweist.

Die Zwischenhülse 5 überragt bohrrichtungsseitig das Gehäuseteil 3. Ein drehfest mit der äusseren Wandung der Zwischenhülse 5 in Verbindung stehendes zweites Dreh angriffselement 52 in Form eines Zahnrades ist in jenem Bereich der Zwischenhülse 5 angeordnet, der das Gehäuseteil 3 bohrrichtungsseitig überragt.

Die Aufnahme 35 überragt bohrrichtungsseitig sowohl das Gehäuseteil 3 als auch die Zwischenhülse 5. Ein drehfest mit der äusseren Wandung der Zwischenhülse 5 in Verbindung stehendes erstes Drehangriffselement 31 in Form eines Zahnrades ist in jenem Bereich der Aufnahme 35 angeordnet, der die Zwischenhülse 5 bohrrichtungsseitig überragt.

Das erste und das zweite Drehangriffselement 31, 52 stehen mit ihrer Aussenprofilierung in einer nicht dargestellten wirkschlüssigen Verbindung mit der ebenfalls in Fig. 1 nicht dargestellten Antriebseinheit und dienen der Übertragung wenigstens einer von der Antriebseinheit ausgehenden Drehbewegung auf die Zwischenhülse. Die Geschwindigkeit der Drehbewegung des zweiten Drehangriffselementes 52 ist höchstens gleich gross wie die Geschwindigkeit des ersten Drehangriffelementes 31. Ein Deckel 2, der sich entgegen der Bohrrichtung an das Gehäuseteil 3 anschliesst, weist einen inneren Aufnahmebereich 21 auf, der sich in Bohrrichtung stufenförmig erweitert. Der von der Bohrrichtung abgewandte Endbereich des Deckels weist eine zentrale Durchtrittsöffnung 24 auf, die der Zuführung von Kühlmittel dient und mit der in Fig. 1 dargestellten Kühlmittelleitung 14 in Verbindung steht. Die Verbindung der Durchtrittsöffnung 24 mit der Kühlmittelleitung 14 ist nicht dargestellt.

Die axiale Abstützung entgegen der Bohrrichtung erfährt der Deckel 2 beispielsweise von dem in Fig. 1 dargestellten Handgriff 11, der in einer geschlossenen Stellung gegen wenigstens eine der entgegen der Bohrrichtung weisenden Flächen des Deckels 2 drückt. Das Zusammenwirken des Handgriffes 11 gemäss Fig. 1 mit dem Deckel 2 ist nicht dargestellt. Der Deckel 2 kann beispielsweise ein Teil des Handgriffes 11 sein, so dass der Deckel 2 von dem Gehäuseteil 3 abhebbar ist, wenn der Handgriff 11 in eine geöffnete Stellung verschwenkt wird und dabei eine axiale Projektionsfläche des Bohrwerkzeuges freigibt, so dass beispielsweise die Entfernung eines Bohrkernes aus dem Bohrwerkzeug oder eine Entnahme des Bohrwerkzeuges 4 aus der Aufnahme entgegen der Bohrrichtung erfolgen kann.

Im inneren Aufnahmebereich 21 des Deckels 2 ist ein Lager 22 in Form eines Kugellagers angeordnet, das der drehbaren Lagerung und der axialen Führung eines Stützelementes 23 dient. Das Stützelement 23 durchsetzt mit einem Schaftbereich einen Innenring des Lagers 22. Der bohrrichtungsseitige Endbereich des Stützelementes 23 weist eine flanschartige Erweiterung 26 auf, die an dem Gehäuseteil 3 aufliegt. Zwischen dieser flanschartigen Erweiterung 26 und dem Lager 22 befindet sich ein Federelement 25, das sich aus mehreren Tellerfedern zusammensetzt. Das gesamte Stützelement 23 weist eine zentrale Durchgangsbohrung auf, durch die Kühlmittel zum Bohrwerkzeug 4 gelangen kann. Auf der entgegen der Bohrrichtung liegenden Seite des Lagers 22 ist ein Dichtungsteil angeordnet, damit Kühlmittel, welches durch die Durchtrittsöffnung 24 in den inneren Aufnahmebereich 21 dringt, nicht zum Lager 22 gelangen kann. An der bohrrichtungsseitigen Stirnseite der flanschartigen Erweiterung 26 befindet sich eine umlaufend ausgebildete Vertiefung, in die ein Dichtungselement 27 in Form eines O-Ringes teilweise ragt. Mit Hilfe dieses Dichtungselementes wird verhindert, dass Kühlmittel, welches durch die zentrale Durchgangsbohrung des Stützelementes 23 zum Bohrwerkzeug gelangt, bis zur Lagerstelle 34 dringen kann.

## Patentansprüche

1. Bohrgerät mit einer eine Drehbewegung auf ein Bohrwerkzeug (4) übertragenden Aufnahme (35), die einen zentralen Aufnahmebereich (36) für das Bohrwerkzeug (4) aufweist und in einem Gehäuseteil (3) gelagert ist, wobei sich die Aufnahme (35) über zwei im Abstand voneinander beabstandete Lagerstellen (33, 34) am Gehäuseteil (3) abstützt, **dadurch gekennzeichnet, dass** die Längsachse des Bohrwerkzeuges (4) gegenüber der Längsachse des Gehäuseteiles (3) geneigt anordbar ist und eine taumelnde Bewegung des Bohrwerkzeuges (4) um einer gedachten Drehpunkt ermöglicht, welcher am bohrrichtungsseitigen freien Ende des Bohrwerkzeuges (4) angeordnet ist.

2. Bohrgerät nach Anspruch 1, **dadurch gekennzeichnet, dass** die Längsachse des Bohrwerkzeugs (4) mittels wenigstens eines Lagerelementes (44, 45) gegenüber der Längsachse des Gehäuseteiles (3) geneigt anordbar ist.

3. Bohrgerät nach Anspruch 1, **dadurch gekennzeichnet, dass** das die Längsachse des Bohrwerkzeuges (4) samt der Längsachse des Aufnahmebereiches (36) gegenüber der Längsachse des Gehäuseteiles (3) geneigt anordbar ist.

4. Bohrgerät nach Anspruch 3, **dadurch gekennzeichnet, dass** die Längsachse des Aufnahmebereiches (36) mittels wenigstens einer im wesentlichen senkrecht zur Längsachse des Gehäuseteiles (3) versetzbaren Lagerstelle (33, 34) geneigt anordbar ist.

5. Bohrgerät nach Anspruch 4, **dadurch gekennzeichnet, dass** zur Versetzurig wenigstens ein mit wenigstens einer Lagerstelle (33, 34) zusammenwirkendes elastisches Zwischenelement (38) vorgesehen ist.

6. Bohrgerät nach Anspruch 4, **dadurch gekennzeichnet, dass** zur Versetzung wenigstens ein Achsversatzelement (53) vorgesehen ist, das zwischen wenigstens einer Lagerstelle (33, 34) und dem Gehäuseteil (3) angeordnet ist.

7. Bohrgerät nach einem der Ansprüche 1 bis 6, **dadurch gekennzeichnet, dass** die Längsachse des Bohrwerkzeuges (4) gegenüber der Längsachse des Gehäuseteiles (3) unter einem Winkel von 0,10 bis 5° neigbar ist.

8. Bohrgerät nach einem der Ansprüche 1 bis 7, **dadurch gekennzeichnet, dass** zwischen den Lagerstellen (33, 34) und dem Gehäuseteil (3) eine Zwischenhülse (5) drehbar angeordnet ist, die zur Übertragung einer Drehbewegung Drehangriffsmittels aufweist.

9. Bohrgerät nach Anspruch 8, **dadurch gekennzeichnet, dass** die Drehzahl der Zwischenhülse (5) und die Drehzahl der Aufnahme (35) nicht synchron sind.

## Claims

1. Drilling device with a recess (35) transferring a rotary movement to a drilling tool (4), which recess exhibits a central receiving area (36) for the drilling tool (4) and is mounted in a housing section (3), wherein the recess (35) is supported by two bearing applications (33,34) on the housing section (3) spaced a certain distance apart, **characterised in that** the longitudinal axis of the drilling tool (4) can be arranged so that it is inclined relative to the longitudinal axis of the housing section (3) and allows the drilling tool (4) to perform a tumbling movement about an imaginary fulcrum arranged on the free end of the drilling tool (4) on the side facing the direction of drilling.

2. Drilling device according to claim 1, **characterised in that** the longitudinal axis of the drilling tool (4) can be arranged so that it is inclined relative to the longitudinal axis of the housing section (3) by mean of at least one bearing element (44, 45).

3. Drilling device according to claim 1, **characterised in that** the longitudinal axis of the drilling tool (4), together with the longitudinal axis of the receiving area (36), can be arranged so that they are inclined relative to the longitudinal axis of the housing section (3).

4. Drilling device according to claim 3, **characterised in that** the longitudinal axis of the receiving area (36) can be arranged so that it is inclined by means of at least one bearing application (33, 34) that can be displaced essentially perpendicularly to the longitudinal axis of the housing section (3).

5. Drilling device according to claim 4, **characterised in that** an elastic intermediate element (38) interacting with at least one bearing application (33, 34) is provided for the displacement.

6. Drilling device according to claim 4, **characterised in that** at least one axial displacement element (53) is provided for the displacement, which element is arranged between at least one bearing application (33, 34) and the housing section (3).

7. Drilling device according to one of claims 1 to 6, **characterised in that** the longitudinal axis of the drilling tool (4) can be arranged so that it is inclined relative to the longitudinal axis of the housing section (3).

8. Drilling device according to one of claims 1 to 7, **characterised in that** an intermediate sleeve (5) is arranged rotatably between the bearing applications (33, 34) and the housing section (3), which sleeve is provided with rotary means of application for transferring a rotary movement.

9. Drilling device according to claim 8, **characterised in that** the speed of the intermediate sleeve (5) and the speed of the recess (35) are not synchronous.

## Revendications

1. Outil de forage avec une pièce de raccordement (35) qui transmet un mouvement de rotation à un outil de forage (4) et qui comporte une zone réceptrice centrale (36) pour l'outil de forage (4) et est logée dans une partie de carter (3), la pièce de raccordement (35) prenant appui sur la partie de carter (3) par l'intermédiaire de deux points d'appui (33, 34) distants l'un de l'autre, **caractérisé en ce que** l'axe longitudinal de l'outil de forage (4) peut être disposé de manière inclinée par rapport à l'axe longitudinal de la partie de carter (3) et permet un mouvement de bascule de l'outil de forage (4) autour d'un centre de rotation imaginaire, lequel est situé à l'extrémité libre, côté direction de forage, de l'outil de forage (4).

2. Outil de forage selon la revendication 1, **caractérisé en ce que** l'axe longitudinal de l'outil de forage (4) peut être disposé de manière inclinée par rapport à l'axe longitudinal de la partie de carter (3) au moyen d'au moins un élément d'appui (44, 45).

3. Outil de forage selon la revendication 1, **caractérisé en ce que** l'axe longitudinal de l'outil de forage (4) peut être disposé de manière inclinée par rapport à l'axe longitudinal de la partie de carter (3) conjointement avec l'axe longitudinal de la zone réceptrice (36).

4. Outil de forage selon la revendication 3, **caractérisé en ce que** l'axe longitudinal de la zone réceptrice (36) peut être disposé de manière inclinée au moyen d'au moins un point d'appui (33, 34) déplaçable sensiblement perpendiculairement à l'axe longitudinal de la partie de carter (3).

5. Outil de forage selon la revendication 4, **caractérisé en ce que**, pour le déplacement, il est prévu au moins un élément intermédiaire élastique (38) coopérant avec au moins un point d'appui (33, 34).

6. Outil de forage selon la revendication 4, **caractérisé en ce que**, pour le déplacement, il est prévu au moins un élément de désaxage (53) qui est disposé entre au moins un point d'appui (33, 34) et la partie de carter (3).

7. Outil de forage selon une des revendications 1 à 6, **caractérisé en ce que** l'axe longitudinal de l'outil de forage (4) est inclinable d'un angle de 0,10° à 5° par rapport à l'axe longitudinal de la partie de carter (3).

8. Outil de forage selon une des revendications 1 à 7, **caractérisé en ce qu'**un manchon intermédiaire (5) comportant des moyens de mise en rotation pour transmettre un mouvement de rotation est monté tournant entre les points d'appui (33, 34) et la partie de carter (3).

9. Outil de forage selon la revendication 8, **caractérisé en ce que** la vitesse de rotation du manchon intermédiaire (5) et la vitesse de rotation de la pièce de raccordement (35) ne sont pas synchrones.
